# EUROPEAN PATENT APPLICATION

(11) **EP 1 936 973 A1**
(43) Date of publication of application: **25.06.2008**
(21) Application number: 07254650.0
(22) Date of filing: 30.11.2007
(51) Int. Cl.: H04N 5/781, H04N 5/85, G11B 27/034, H04N 5/92, H04N 9/82

(54) **Broadcast receiving apparatus and recording guidance method thereof**

(30) Priority: 18.12.2006 JP 2006340013
(71) Applicant: Hitachi, Ltd., Chiyoda-ku Tokyo 100-8280 (JP)
(72) Inventor: Ichifuji, Yasuhisa, Tokyo 100-8220 (JP); Yamashita, Tomochika, Tokyo 100-8220 (JP); Watanabe, Mitsunobu, Tokyo 100-8220 (JP)
(74) Representative: Calderbank, Thomas Roger

(57) **Abstract**

For providing a recording guidance method to increase an operability of a broadcast receiving apparatus, installing a removable hard disk in addition to an internal information recording medium built therein, within the broadcast receiving apparatus which comprises a display portion and at least an install-type HDD 25 and a removable HDD (i.e., iVDR) 26, so as to enable recording of a broadcast program(s), selectively. The recording is conducted into the install-type HDD 25, in substitution, if the removable iVDR 26 is not inserted therein when executing the recording programmed onto the said removable iVDR 26, as well as displaying a message on the display portion, for prompting to insert the iVDR.

## Description

The present invention relates to a broadcast receiving apparatus, such as, a television receiver or the like, and it relates, in particular, to a broadcast receiving apparatus, being capable to record a broadcast program(s) therein, with using a removable recording medium having a large memory capacity, and also a recording guidance method for that.

In recent years, in the field of broadcastings, such as, television broadcastings, representatively, for example, including a satellite communication system, a terrestrial broadcasting system, etc., digitalization is advanced so as to conduct the broadcasting with using a digital signal, in the place of the conventional analog signal, and accompanying with this, a large number of programs are broadcasted. In addition thereto, in recent years, a broadcast receiving apparatus was already put into a practice, building a recording medium of large memory capacity therein, thereby enabling a user to program recording of the broadcast programs, easily, among of that large number of broadcastings.

In addition to the above, within the following Patent Document 1 is already known a removable hard disk being removable to a main body of an equipment, enjoying the portability as an advantage thereof, and further with using such the removable hard disk, there are already proposed a data recording apparatus and a method thereof for recording data, such as, broadcast contents or the like, with classifying/reorganizing them, and also a data management system.

[Patent Document 1] Japanese Patent Laying-Open No. 2005-310294 (2005); and

[Patent Document 2] Japanese Patent Laying-Open No. 2006-319728 (2006).

By the way, in recent years, there is also proposed a broadcast receiving apparatus, having an internal or built-in recording medium, having large recording capacity for recording the broadcast programs therein, and further having the removable hard disk mentioned above therein, and thereby providing a more convenient recording environment to the user.

However, such the conventional arts as were mentioned above relate to the data management system, being connected with various kinds of data recording apparatuses, which includes the removable hard disk therein, through a home network. And, between the plural number of the recording media connected with each other, they are proposed to aim reservation of the contents, which are stored dispersedly, easily, while classifying/rearranging them, but no consideration was paid on convenience or usability thereof, in particular, in case when applying such the removable hard disk into the broadcast receiving apparatus, such as, the television receiver, etc.

Thus, the broadcast receiving apparatus, including the television receiver, etc., is that to be used within a home, normally, and therefore, it is operated by various kinds of human being, including a child and an old man, etc. On the other hand, as was mentioned above, in case when applying the removable hard disk to be a recording medium for recording within the broadcast receiving apparatus, it is possible to provide the conveniences, i.e., sharing that removable hard disk between the different receiving apparatuses, in common, but on the other hand, there is also pointed out a drawback, i.e., recording operation programmed cannot be executed since the removable hard disk is not installed in case when it is necessity.

Then, according to the present invention, accomplished by considering the drawbacks in the conventional arts mentioned above, and in more details thereof, a preferred aim is to increase the operability of the broadcast receiving apparatus, installing the removable hard disk in a removable manner, in addition to an internal (or built -in) information recording medium built therein, and thereby to provide a broadcast receiving apparatus having a recording guidance function for achieving the conveniences and the usability thereof, and further there is provided a recording guidance method for accomplishing it.

According to the present invention, for accomplishing the object mentioned above, there is provided a broadcast receiving apparatus, comprising: a tuner portion, which is configured to receive a programbroadcasted, so as to output video data therefrom; a display portion, which is configured to display the video data outputted from said tuner portion; a recording control portion, which is configured to control recording of the video data outputted from said tuner portion; a recording program control portion for broadcast program, which is configured to control the recording of the video data outputted from said tuner portion; an install-type information recording medium, which is configured to record the video data from said recording control portion; and further a member, which is configured to install a removable recording medium, wherein said recording control portion conducts the recording of a broadcast program (s), upon which recording is programmed, into said install-type information recording medium, if said install-type information recording medium is not inserted therein when executing the recording programmed onto said removable recording medium.

Also, according to the present invention, there is further provided a recording guidance method for use of a broadcast receiving apparatus, comprising a display portion, and at least an install-type information recording medium for recording video data therein and a member for installing a removable recording medium in a part thereof, thereby to enable recording of a broadcast program(s) therein, selectively, wherein the recording is conducted into said install-type information recording medium, in substation, if said install-type information recording medium is not inserted therein when executing the recording programmed onto said removable recording medium.

Further, according to the invention, within the broadcast receiving apparatus and the recording guidance method for use thereof, it is preferable that said recording control portion further displays a message on said display portion, for prompting to insert said removable recording apparatus, if said removable recording medium is not inserted when conducing the recording program into said removable recording medium, or that said recording control portion further displays insertion of said removable recording medium and a kind of said removable recording medium on said display portion, when said removable recording medium is inserted. In addition thereto, it is also preferable that said removable recording medium stores therein search information, including a time when the broadcast program is broadcasted, upon which recording is programmed, and said recording control portion conducts the recording of the video data with controlling said recording program control portion for broadcast programs, upon basis of said search information stored within said removable recording medium inserted. And, in particular, it is preferable that said removable recording medium is a removable HDD, which is made of a HDD.

Thus, according to the present invention mentioned above, there can be obtained an effect being superior from a practical viewpoint, i.e., increasing the operability of the broadcast receiving apparatus, installing the removable hard disk in a removable manner, in addition to an internal information recording medium built therein, and thereby increasing the convenience and usability thereof . Also, according to the recording guidance method thereof, there can be obtained an effect being superior from a practical viewpoint, i.e., enabling a user, including a child and an old man, to achieve the recording including into the removable hard disk, with certainty.

Those and other objects, features and advantages of the present invention will become more readily apparent from the following detailed description when taken in conjunction with the accompanying drawings wherein:
Fig. 1 is a view for showing an outlook of a broadcast receiving apparatus, according to an embodiment of the present invention;
Fig. 2 is a block diagram for showing the entire inner structures of the broadcast receiving apparatus mentioned above;
Fig. 3 is a view for showing the constituent elements relating to a recording guidance function, extracting from the entire inner structures of the broadcast receiving apparatus mentioned above;
Figs. 4 (A) and 4 (B) are views for showing an example of a display screen when a removable-type HDD is inserted (pulled in), within the recording guidance function of the broadcast receiving apparatus mentioned above;
Fig. 5 is a view for showing an example of the display screen for conducting a program for recording a broadcast program, within the recording guidance function of the broadcast receiving apparatus mentioned above;
Fig. 6 is a view for showing an example of the display screen for setting up a destination of recording, within the recording guidance function of the broadcast receiving apparatus mentioned above;
Fig. 7 is a view for showing an example of the display screen for prompting a user to insert (pull in) the iVDR, within the recording guidance function of the broadcast receiving apparatus mentioned above;
Fig. 8 is a view for showing an example of the display screen for prompting a user to insert the iVDR, in particular, when executing the recording, within the recording guidance function of the broadcast receiving apparatus mentioned above;
Fig. 9 is a view for explaining a programming function for recording the broadcast program within the broadcast receiving apparatus, by means of the removable-type HDD;
Fig. 10 is a view for showing an example of a message when the iVDR is inserted;
Fig. 11 is a view for showing an example of a message, but when inserting the iVDR, which differs in the format thereof;
Fig. 12 is a view for showing an example of a message, when the iVDR is pulled out during the recording;
Fig. 13 is a view for showing an example of a setup screen for repetitive recording;
Fig. 14 is a view for showing another example of a setup screen for repetitive recording; and
Fig. 15 is a view for showing an example of a screen for setting up an execution of the repetitive recording from a program list.

Hereinafter, embodiments according to the present invention will be fully explained by referring to the attached drawings.

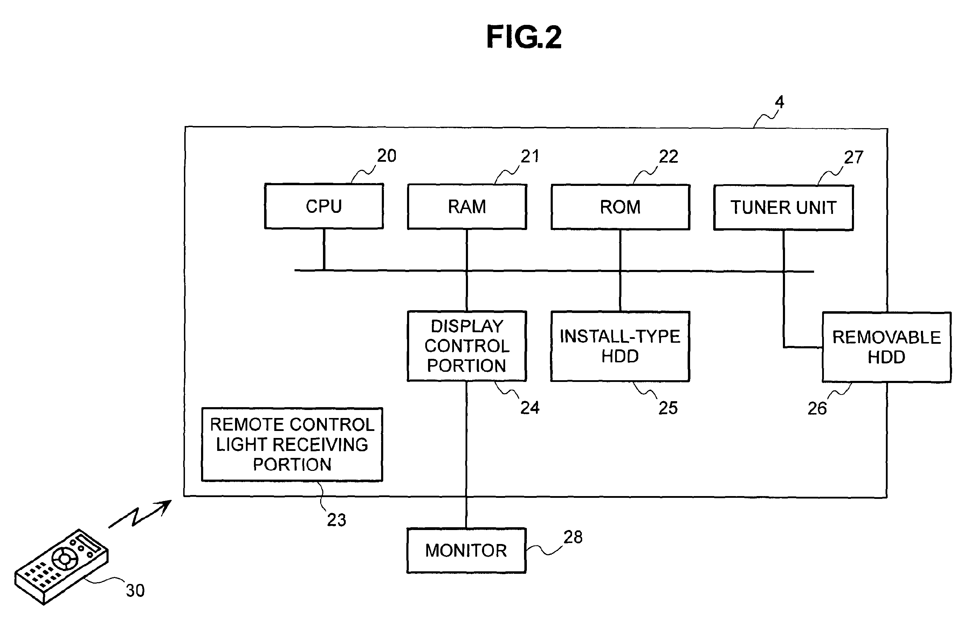

First of all, Fig. 2 attached herewith is a block diagram for showing the entire inner structures a broadcast receiving apparatus, according to an embodiment of the present invention, and in the figure, for executing control of the apparatus, as a whole, the broadcast receiving apparatus 1 comprises a CPU (Central Processing Unit) 20, a RAM (Random Access Memory) 21, and a ROM (Read Only Memory) 22, etc. Thus, the CPU 20 reads out programs memorized in the ROM 22 onto the RAM 21, so as to execute them, and thereby executing various kinds of operations, which will be mentioned later.

Also, within the apparatus is provided a tuner unit 27 for receiving broadcasting, and further a display control portion 24 for conducting control on display of information upon a display portion connected therewith. And, in the said apparatus are provided a HDD (Hard Disk Drive) 25 of install-type, to be a data recording portion for recording video/audio signals to be recorded (hereinafter, being called "video data"), and further a removable hard disk 26, in parallel with.

Further, a reference numeral 30 within the figure depicts a remote controller for operating the broadcast receiving apparatus, wherein a control signal, which is generated upon operation of that remote controller by a user, irradiates on, as infrared rays, and it is detected upon a remote control light receiving portion 23 provided on the broadcast receiving apparatus 1, to be inputted into the CPU 20,and thereby executing predetermined control operations. However, though not shown in the figure, it is also possible to input the video data to be recorded from an external input terminal, which is provided on a side of the apparatus. In addition thereto, a display portion 28 and a tuner unit 27 may be made up in one body (or as a unit) with that apparatus 1, as will be shown later, or those may be construed into separate bodies.

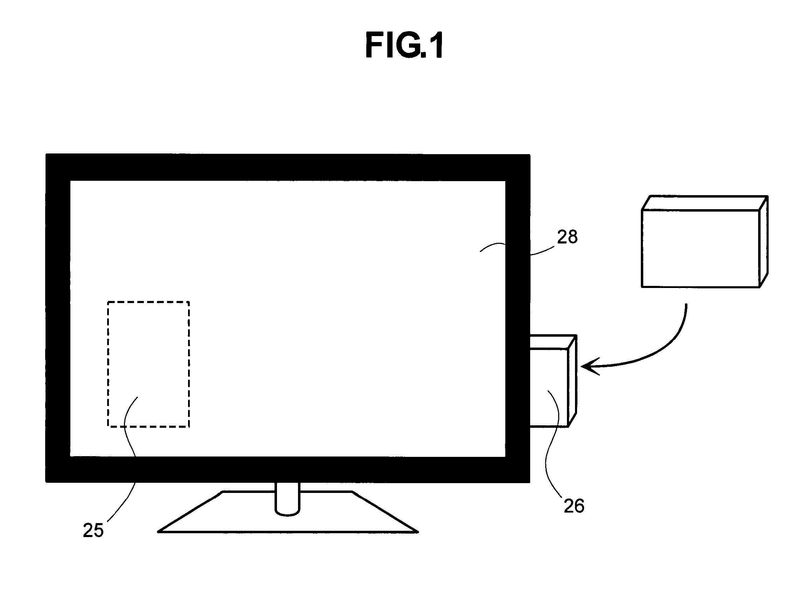

Next, Fig. 1 attached herewith shows an outlook of the broadcast receiving apparatus, the inner structures of which were explained in the above. As is apparent from this figure, the broadcast receiving apparatus 1 mentioned above is disposed with the display portion 28, which is constructed with a flat display, such as, a liquid crystal panel or a plasma display, etc., for example, on the rear surface side thereof. Also, in a portion thereof, though not shown in the figure herein, there are attached speakers for outputting audio therefrom, and further, as is shown by broken lines in the figure, the install-type HDD (built-in HDD) 25 mentioned above. Further, also on one end surface of that display portion 28, though not shown in the figure, there is provided a slot, into which the removable HDD 26 can be installed or inserted. Thus, as is shown by an arrow in the figure, for the user it is possible to use the removable HDD 26, to be an information recording medium for recording the broadcast program (s) therein, by further inserting it onto one end surface of the display portion 28 of the broadcast receiving apparatus, in addition to the built-in HDD 25.

Further, with provision of such removable HDD 26, as was mentioned above, it is possible to increase a memory capacity of a recording means for recording the video data of the broadcast program(s), freely, depending on necessity thereof, and to move that removable HDD 2 6 to other broadcast receiving apparatus (i.e., pulling out from a certain apparatus and pulling into other broadcast receiving apparatus), as well. And, with this can be obtained conveniences or usability, i.e. , it is possible to enjoy the broadcast program(s) recorded, not only limited upon the broadcast receiving apparatus, with which that broadcast program was recoded, but also, other than that, upon other broadcast receiving apparatus, which is convenient for the user, appropriately.

Following to the above, hereinafter, detailed explanation will be given on a recording guidance function or a method thereof, within the broadcast receiving apparatus, the detailed structures of which were given in the above, by referring to the figures attached herewith.

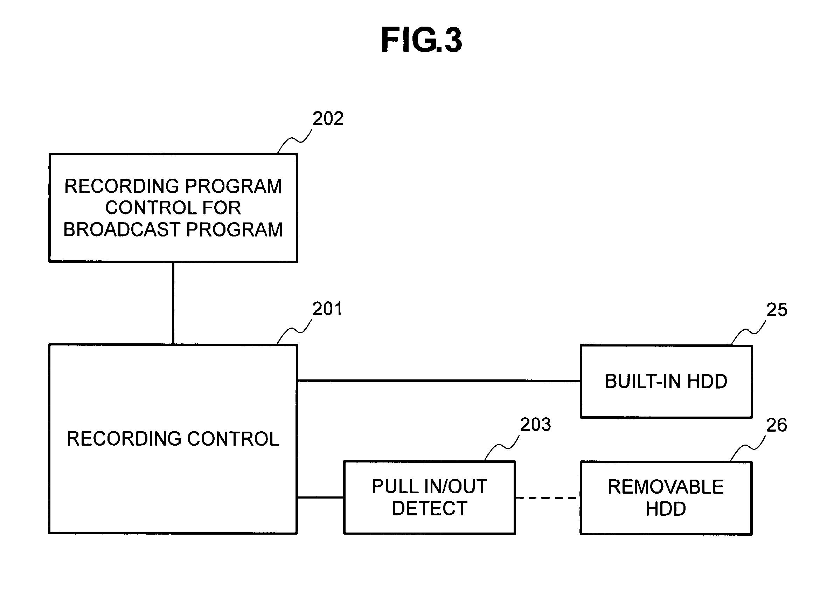

Firstly, Fig. 3 attached herewith shows the constituent elements in relation to the above recording guidance function, extracting them from the elements of the broadcast receiving apparatus mentioned above, and they include a recording control portion 201 and a recording program control portion 202 for a broadcast program(s), which are built up with the CPU 20 mentioned above. That recording control portion 201 is connected with the install-type HDD (or, the built-in HDD) 25, and on the other hand, for the removable HDD 26, there is provided a pull in/out detect portion 203 for detecting that the said HDD is inserted (or pulled) into the slot mentioned above.

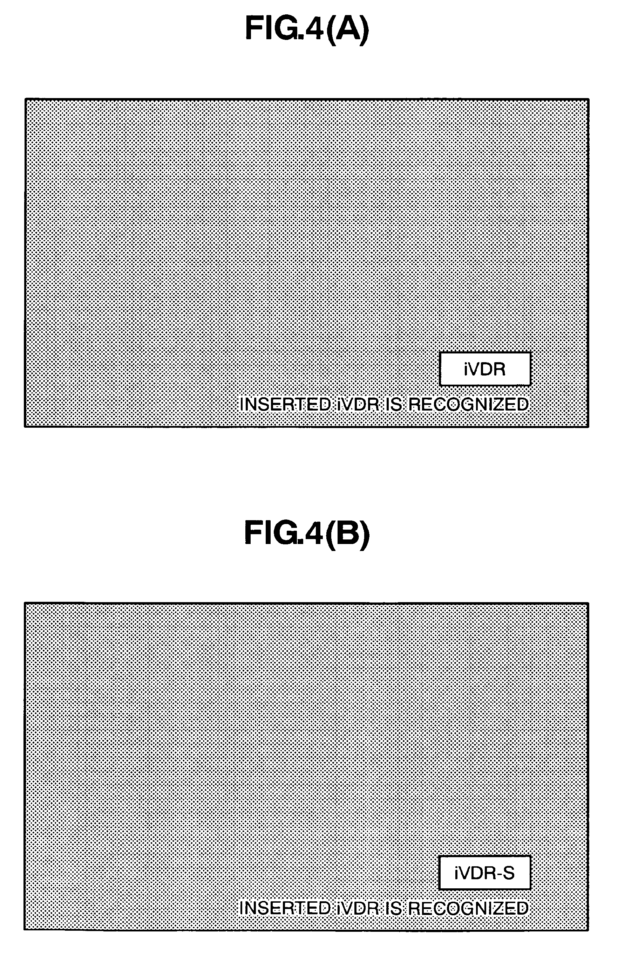

With the recording guidance function mentioned above, first of all, in case where the above removable HDD 26 is inserted into the slot, as is shown in Figs. 4 (A) and 4 (B) attached, on the display portion 28 are displayed that the said inserted removable HDD 26 is inserted, as well as, the kind thereof. Thus, at present, for the removable HDD 26 to be installed within the broadcast receiving apparatus, there is determined a regulation, as Information Versatile Disk for Removable usage (iVDR) . Then, in this example, the display portion 24 displays thereon, for example, "iVDR" or a logo thereof, and at the same time, also a sentence, "iVDR inserted is recognized", for indicating that the said removable HDD 26 is inserted. However, with this iVDR, for the purpose of protecting the copy rights of movies, for example, there are already known the following, i.e., a type enabling security for regulating a number of times of copying of the video recorded, and a type not enabling that security, and Fig. 4(A) shows therein the display when inserting the latter iVDR, not enabling the security, while Fig. 4 (B) the display (i.e., "iVDR-S") when inserting the former iVDR enabling the security.

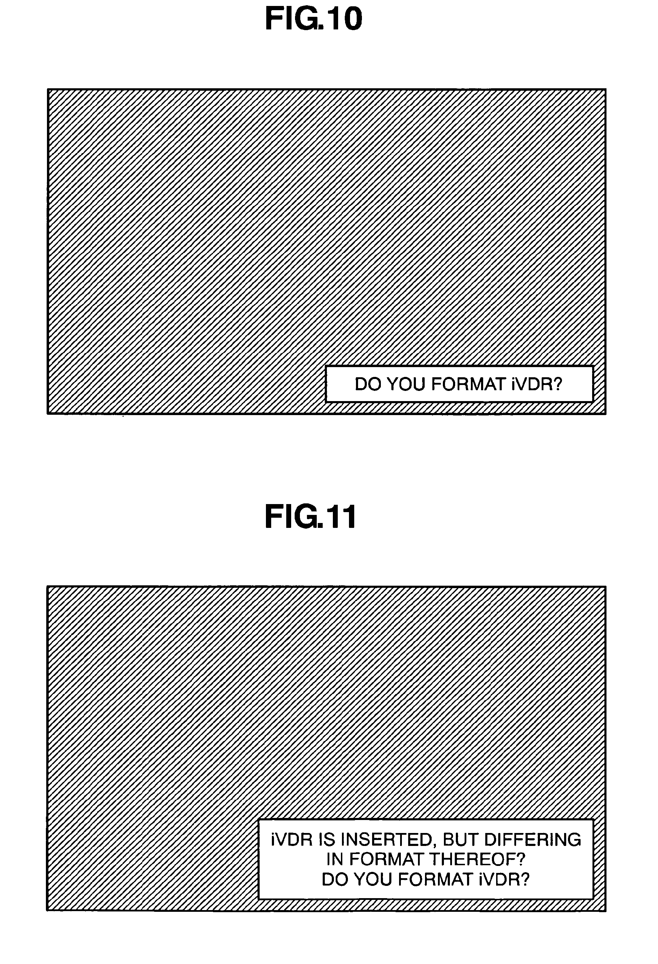

Further, in case when the iVDR is inserted, the pull in/out detect portion 203 detects the insertion thereof, and also detects the formation condition of that iVDR. In this instance, the iVDR inserted is not formatted for use in television recording (i.e., in an initial condition), the display control portion 24 operates, so as to display a message, "Do you format iVDR?", as shown in Fig. 10, on the screen of the display portion 28. For the iVDR, there are determined a plural number of regulations: i.e., for use of television recording, for use of audio recording, and for use of still-picture recording, for example, and in case when using the iVDR within the apparatus according to the present embodiment, there is necessity of formatting the iVDR for use of television recording. The message mentioned above is for conducting this format operation. Or, when the iVDR is inserted therein, which has a format other than that for television recording, for example, since the format differs from that, which that apparatus can deal with, then a message, "iVDR is inserted differing in the format thereof. Do you format the iVDR?", is displayed on, as is shown in Fig. 11.

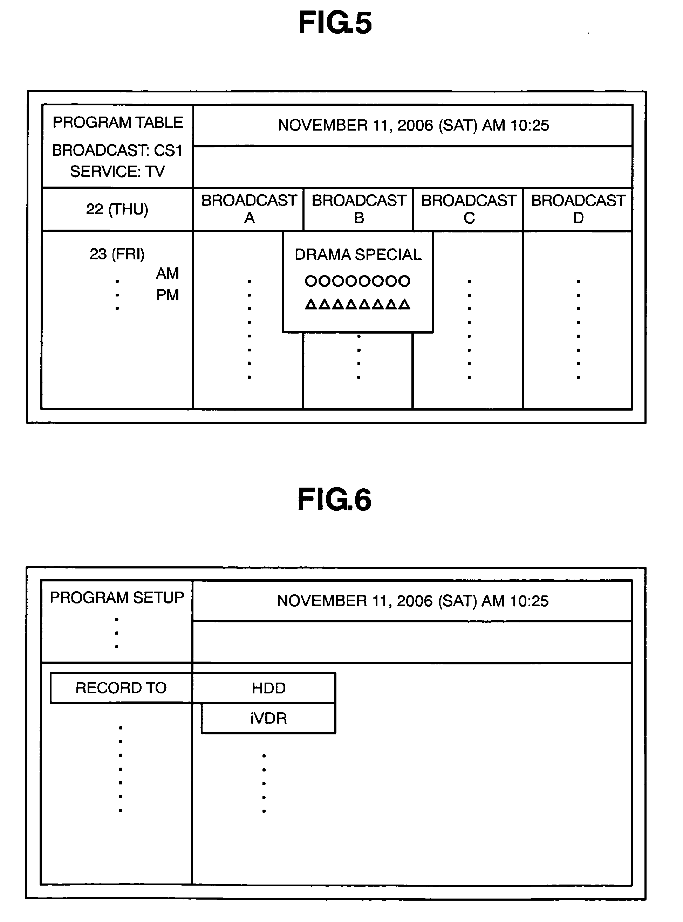

Next, explanation will be made on the display contents, which is displayed on the display portion 28 mentioned above, in particular, when the user programs the recording of broadcast program(s), which she/he wishes to record. In this instance, for example, with using the broadcast program information (i.e., Electronic Program Guide) or the like, on the display portion 28 mentioned above is displayed a program setup screen, which is shown in Fig. 5 attached herewith. With this screen, for the user it is possible to set up the program for recording the broadcast program, which she/he wishes to record, from the broadcast programs displayed, with easy or simple operation. Following thereto, onto the display portion 28 is displayed a screen for selecting a destination or address of the recording, as is shown in Fig. 6 attached herewith. Thus, as is apparent from the figures, there are displayed "HDD", being the install-type HDD (i.e., the built-in HDD) 25, and "iVDR", being the removable HDD, and with this, for the user it is possible to select one of those recording media, for example, with using cursor moving buttons and a decision button, etc., of the remote controller 30 mentioned above.

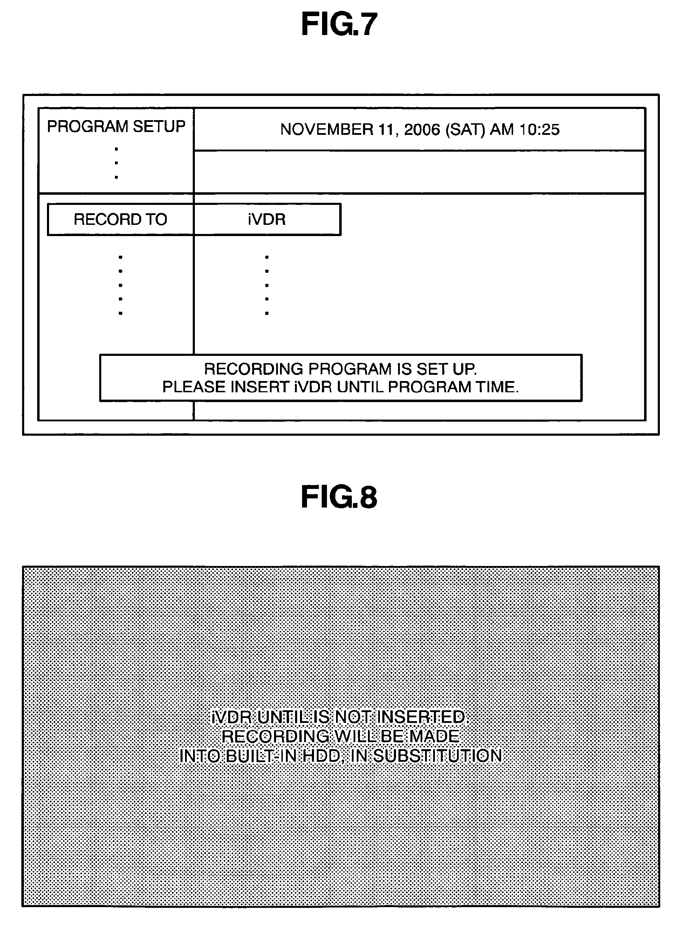

However, in addition to the recording program information for the broadcast program, such as, a program name of the broadcast program, which is programmed to be recorded in the manner mentioned above, and broadcasting time thereof, the information including the recording information at the destination of recording is stored into the memory portion (such as, the above-mentioned RAM 21 or other memory devices, for example), which builds up the recording program control portion 202 mentioned above. Further, as is shown in Fig. 7, the "iVDR" is selected as the destination of recording the video data of the broadcast program, which is programmed to be recorded, and is set up. In that instance, when insertion of the "iVDR" cannot be detected by the pull in/out detect portion 203, then as is shown in the figure, the display, i.e. , "Recording program is set up. Please insert iVDR un to the programmed time." is made on the display portion 28, for prompting the user to insert the iVDR. Or, the same contents to the above may be noticed on voices, through the speakers not shown in the figure, but not building up the display portion 28 mentioned above.

Next, after completing the above-mentioned recording program for the broadcast program, explanation will be made on the display contents at the time point when the said broadcast program, on which the recording program is set up, is broadcasted. Thus, when the said broadcast program is started, but after setting up the recording program for recording the broadcast program into the iVDR, as was mentioned above, then the broadcast receiving apparatus records the video data of the broadcast program, in accordance with the setup contents mentioned above, i.e., into the iVDR inserted within the slot. However, in that instance, there can be considered a case where the said iVDR is not inserted into the slot, depending upon cases. Then, according to the present embodiment, when the insertion of the iVDR cannot be detected by the pull in/out detect portion 203, then the display control portion 24 display that fact, i.e., "iVDR is not inserted" as shown in Fig. 8 attached herewith. Or, the same contents to the above may be noticed on voices, through the speakers not shown in the figure, but not building up the display portion 28 mentioned above. At the same time thereof, the broadcast receiving apparatus conducts control, such that the recording control portion 201 changes the destination of recording the broadcast program, upon which recording is programmed, from the iVDR to the install-type HDD. In other words, with the function of the recording control portion 201, the video data of the broadcast program, upon which recording is programmed, is supplied and recorded, once, not into the said iVDR, but into the install-type HDD (or built-in HDD) 25. With this, the display control portion 24 conducts the display, "Recording will be made to built-in HDD, in substitution." on the display portion 28. But, when this substitution recording is conducted, thereafter, for the user it is possible to record the video data recorded into the built-in HDD in substitution, once, moving it into the iVDR of her/his desire, by inserting that iVDR into slot. For example, a flag for showing the substitution recording may be added to the broadcast program data, which is recorded in substitution, and then the broadcast program data added with that flag may be moved or copied from the HDD to the iVDR, automatically, when the insertion of the iVDR is detected by the pull in/out detect portion 203. Of course, such moving or copying may be conducted responding to an instruction made by the user.

Thus, with this, even for the user who is not familiar with operation of the iVDR, i.e., being the removable HDD, it is possible to execute the recording programmed on the broadcast program of her/his wish into the said iVDR, with certainty.

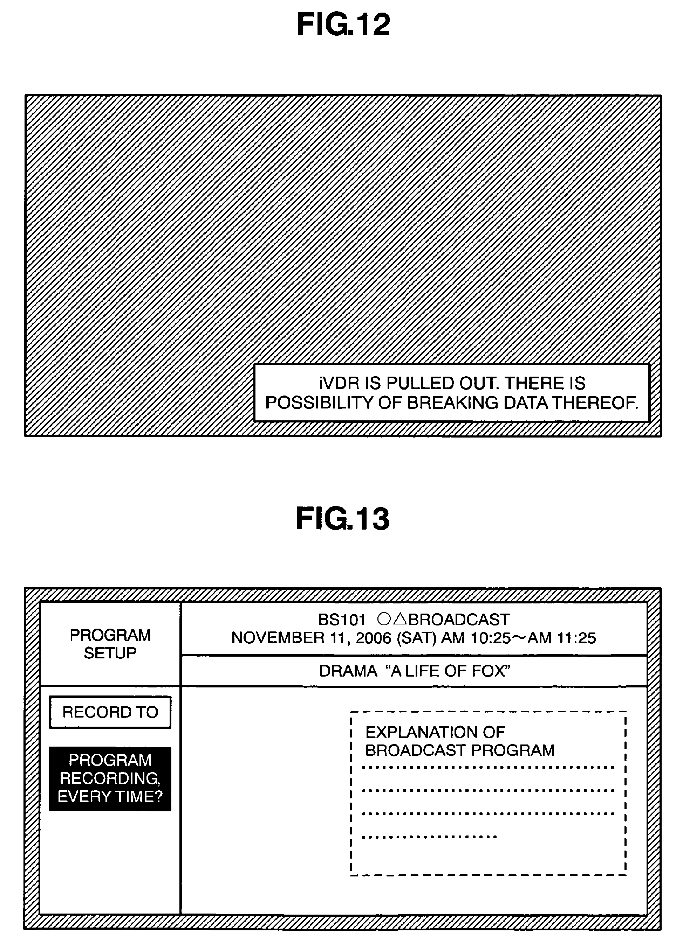

However, in case when the iVDR, i.e., being the removable HDD is removed or pull out during when recording the broadcast program therein, the pull in/out detect portion 203 detect that, and sends a control signal to the display control portion 24. The display control portion 24 operates to display a message, i.e., "iVDR is pulled out. There is a possibility of breaking the data under recording." as is shown in Fig. 12, on the screen thereof. With this, it is possible to give an alarm or warning a defect to the user, such as, data damage that will be generated by pulling out the iVDR on the way of recording operation of the video, etc. Thereafter, but after elapsing a predetermined time-period, it is possible to display a message, i.e., "iVDR is not inserted" or "Please insert iVDR", again.

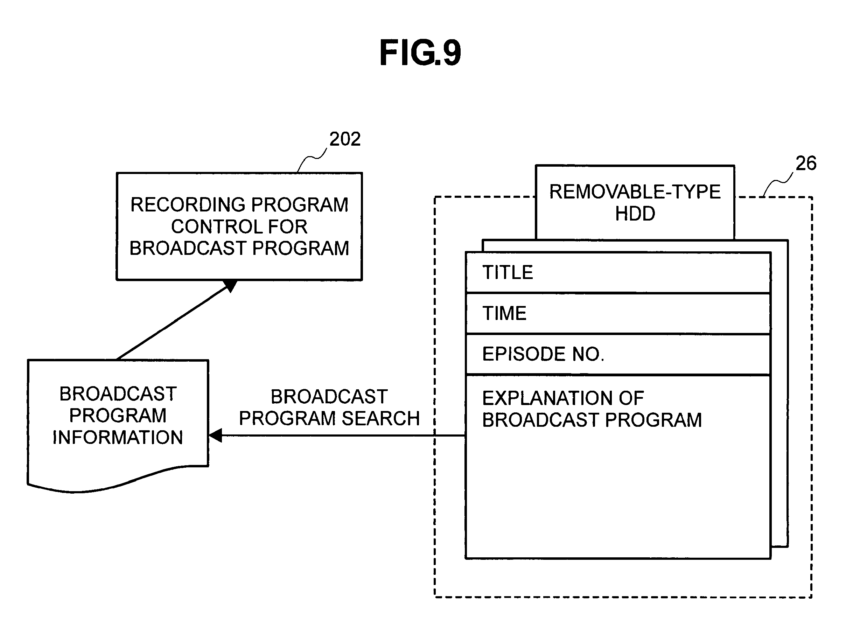

Further, Fig. 9 attached herewith shows a function of controlling the recording program for the broadcast program(s) on the broadcast receiving apparatus 1, with using the removable HDD 26 mentioned above. This is also a convenient function; for example, in case where the recording program is executed upon a broadcast program, which is broadcasted periodically (forexample, everyweek), while inserting the removable-type HDD mentioned above into a certain broadcast receiving apparatus. Thus, as is shown in the figure, on the removable-type HDD 26 are stored a title, time, an episode number, an explanation of broadcast program, etc., of the broadcast program, upon which recording is programmed, as search information, in a part thereof. And, thereafter, when this removable-type HDD 26 is inserted into other broadcast receiving apparatus, after pulled out it from that broadcast receiving apparatus, then the recording control portion 201 of the apparatus (please see Fig. 3), into which the removable-type HDD is inserted, reads out that search information in relation to the recording program for the broadcast program(s), which is stored in the removable-type HDD, and transmits that recording program for the broadcast program (s) to the recording program control portion 202, automatically, after comparing/confirming it with the broadcast program information, and thereby registering it to be the broadcast program(s), recording of which is programmed, within that other broadcast receiving apparatus.

In this manner, with the removable-type HDD 26 and the broadcast receiving apparatus, for the user it is possible to enjoy (watch/listen) the broadcast program, which the user wishes by her/himself, while carrying the removable-type HDD 26 recording the broadcast program(s), which the user wishes to enjoy (watch/listen), and inserting into any one of the broadcast receiving apparatuses, which are installed within a home, for example, i.e., there can be achieved superior convenience or usability. However, at that instance, with such the broadcast programs, upon which execution of the automatic recording pogrom for the broadcast program (s) is required, selective execution may be made, for example, by inputting a predetermined number, which is determined in advance, as the "episode number" mentioned above.

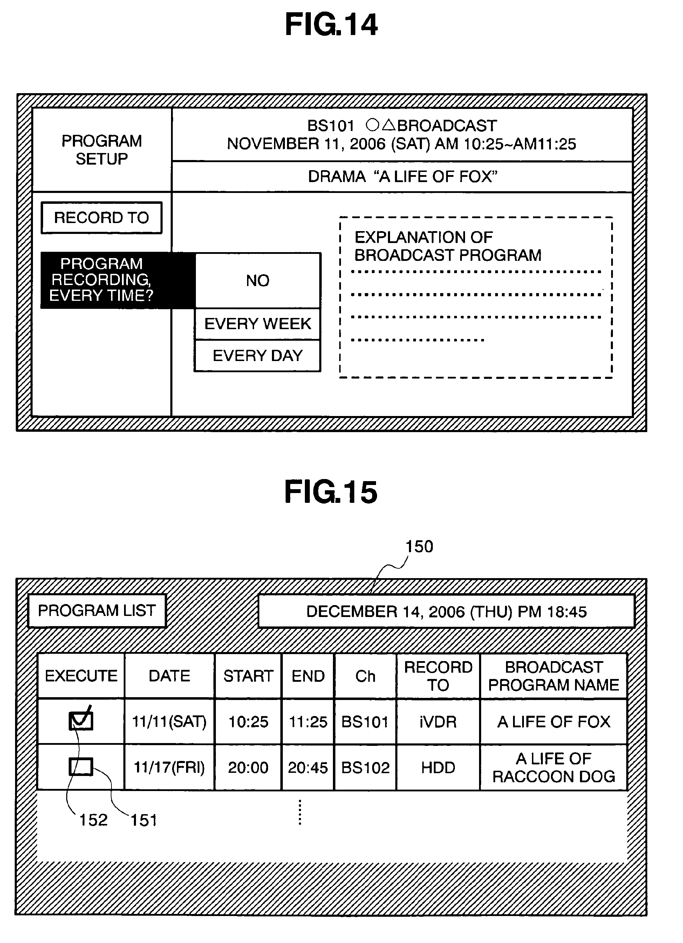

Further, also in the present embodiment, it is possible to conduct the repetitive recording while displaying such the screen as is shown in Fig. 13, for example. In this Fig. 13, selection items are provided in addition to "Do you program recording, every time" in the screen shown into Fig. 7, and where are also shown "date of broadcasting program", "broadcasting channel", "broadcasting station", "broadcasting time (i.e., starting and ending times of broadcasting) ", "broadcast title" and "explanation of broadcast program" together. When selecting this "Do you program recording, every time", then there are further shown depending items, i.e., "No", "Every week" and "Every day" thereon. If "No" is selected herein, then the repetitive recording will not be conducted (or stopped). Thus, the recording is conducted on that broadcast program, only on the day and during time of the broadcasting date and time of the broadcast program, upon which recording is programmed (i.e., "Life of a fox" in the example shown in Fig. 14). If "Every time" is selected, the recording is made upon that broadcast program, on every Saturday, during the broadcasting time (i.e., from AM 10:25 to AM 11:25, in the example shown in Fig. 14) of the broadcast program, upon which recording is programmed. With this, it is possible to achieve the recording program for every week, automatically, of the continuing programs, which will be broadcasted on the same time band, every week, such as, dramas or animations, etc., for example, but without conducting the recording program every week. Or, if "Every day" is selected, the recording is conducted on that broadcast program, during the broadcasting time of the broadcast program, upon which recording is programmed, every day. With this, also in the similar manner, it is possible to achieve the recording program for every day, automatically, of the continuing programs, which will be broadcasted on the same time band, every day, but without conducting the recording program every day.

Further, it is also possible to display a program list of recording, as shown in Fig. 15, for example, thereby letting the user to set up, i.e., to execute or not the repetitive recording program, from this program list. For example, the program list is for showing all the broadcast programs, upon which the recording program is made, and for each of the broadcast program, upon which recording is programmed, there are displayed "date", "broadcast starting time", "broadcast ending time", "channel", destination of recording (i.e., to iVDR or HDD), and "broadcast program name" . And, at a head (i.e., the left end) of each broadcast program are displayed a checkbox 151 and a checkmark 152. The user determines on whether the checkmark should be entered into the checkbox, or removed it therefrom.

Herein, it is assumed that recording program are made on "Life of a fox" and "Life of a raccoon dog", every week, respectively. In an example shown in Fig. 15, since the checkmark 152 is entered in the checkbox 151 corresponding to the "Life of a fox", then the "Life of a fox" is recorded, automatically, every Saturday. On the other hand, since the checkmark 152 is removed from the checkbox 151 corresponding to the "Life of a raccoon dog", the recording thereof will not be executed when the checkmark 152 is removed from, even if the recording program is made on the "Life of a raccoon dog", every week. Of course when the checkmark 152 is entered into the checkbox 151 corresponding to the "Life of a raccoon dog", then it will be recorded every Friday.

With doing this, it is possible to setup, easily, on whether the repetitive recording should be executed or not, from the program list of the recording.

While we have shown and described several embodiments in accordance with our invention, it should be understood that disclosed embodiments are susceptible ofchangesand modifications without departing from the scope of the invention. Therefore, we do not intend to be bound by the details shown and described herein but intend to cover all such changes and modifications that fall within the ambit of the appended claims, as interpreted by the description and drawings.

## Claims

1. A broadcast receiving apparatus, comprising:
a tuner portion, which is configured to receive a program broadcasted, so as to output video data therefrom;
a display portion, which is configured to display the video data outputted from said tuner portion;
a recording control portion, which is configured to control recording of the video data outputted from said tuner portion;
a recording program control portion for broadcast program, which is configured to control the recording operation of the video data outputted from said tuner portion;
an install-type information recording medium, which is configured to record the video data from said recording control portion; and further
a member, which is configured to install a removable recording medium, wherein
said recording control portion conducts the recording operation of a program, upon which recording is programmed, into said install-type information recording medium, if said install-type information recording medium is not inserted therein when executing the recording programmed onto said removable recording medium.

2. The broadcast receiving apparatus, as is described in the claim 1, wherein said recording control portion further displays a message on said display portion, for prompting to insert said removable recording apparatus, if said removable recording medium is not inserted when conducing the recording program into said removable recording medium.

3. The broadcast receiving apparatus, as is described in the claim 1, wherein said recording control portion further displays insertion of said removable recording medium and a kind of said removable recording medium on said display portion, when said removable recording medium is inserted.

4. The broadcast receiving apparatus, as is described in the claim 1, wherein said removable recording medium stores therein search information, including a time when the broadcast program is broadcasted, upon which recording is programmed, and said recording control portion conducts the recording operation of the video data with controlling said recording program control portion for broadcast program, upon basis of said search information stored within said removable recording medium inserted.

5. The broadcast receiving apparatus, as is described in the claim 1, wherein said removable recording medium is a removable HDD, which is made of a HDD.

6. The broadcast receiving apparatus, as is described in the claim 2, wherein said removable recording medium is a removable HDD, which is made of a HDD.

7. The broadcast receiving apparatus, as is described in the claim 3, wherein said removable recording medium is a removable HDD, which is made of a HDD.

8. The broadcast receiving apparatus, as is described in the claim 4, wherein said removable recording medium is a removable HDD, which is made of a HDD.

9. A recording guidance method for use of a broadcast receiving apparatus, comprising a display portion, and at least an install-type information recording medium for recording video data therein and a member for installing a removable recording medium in a part thereof, thereby to enable recording of a broadcast program(s) therein, selectively, wherein the recording is conducted into said install-type information recording medium, in substation, if said install-type information recording medium is not inserted therein when executing the recording programmed onto said removable recording medium.

10. The recording guidance method, as is described in the claim 9, wherein further a display is made on said display portion, for prompting to insert said removable recording apparatus, if said removable recording medium is not inserted when conducing the recording program into said removable recording medium.

11. The recording guidance method, as is described in the claim 9, wherein there are further displayed on said display portion, insertion of said removable recording medium and a kind of said removable recording medium on said display portion, when said removable recording medium is inserted.

12. The recording guidance method, as is described in the claim 9, wherein said removable recording medium stores therein search information, including a time-period when the broadcast program is broadcasted, upon which recording is programmed, and the recording of the video data is conducted upon basis of said search information stored within said removable recording medium inserted, within said broadcast receiving.

13. The recording guidance method, as is described in the claim 9, wherein said removable recording medium is a removable HDD, which is made of a HDD.

14. The recording guidance method, as is described in the claim 10, wherein said removable recording medium is a removable HDD, which is made of a HDD.

15. The recording guidance method, as is described in the claim 11, wherein said removable recording medium is a removable HDD, which is made of a HDD.

16. The recording guidance method, as is described in the claim 12, wherein said removable recording medium is a removable HDD, which is made of a HDD.
